# EUROPÄISCHE PATENTSCHRIFT

(11) **EP 1 688 655 B1**
(45) Veröffentlichungstag und Bekanntmachung des Hinweises auf die Patenterteilung: **12.11.2008**
(21) Anmeldenummer: 05026821.8
(22) Anmeldetag: 08.12.2005
(51) Int. Cl.: F16L 5/02, F16L 23/028

(54) **Flanschverbindung für Leitungen**
Flanged connections for conduits
Raccordements à brides pour conduites

(30) Priorität: 03.02.2005 DE 202005001715 U
(43) Veröffentlichungstag der Anmeldung: 09.08.2006
(73) Patentinhaber: VIEGA GmbH & Co. KG, 57439 Attendorn (DE)
(72) Erfinder: Arning, Ulrich, 57439 Attendorn (DE); Eckel, Mario, 57368 Lennestadt (DE); König, Manfred, 57439 Attendorn (DE)
(74) Vertreter: Walter, Philipe

(56) Entgegenhaltungen:
- DE-C- 24 273
- FR-A- 1 574 996
- FR-A- 2 649 469
- GB-A- 1 317 758
- US-A- 2 912 712
- US-A- 3 243 206
- US-B1- 6 494 503

## Beschreibung

Die vorliegende Erfindung betrifft eine Flanschverbindung für Leitungen, insbesondere für Sanitärinstallationen, mit einem Stutzen, der endseitig jeweils mit einem Rohr zur Herstellung einer abgedichteten Verbindung zusammenfügbar ist, und einem Flansch, der radial außen an dem Stutzen angeordnet ist und über Befestigungsmittel an einem weiteren Bauteil festlegbar ist, um eine Verbindung zwischen dem Stutzen und dem weiteren Bauteil herzustellen.

Aus der WO 98/06966 ist eine Flanschverbindung für Rohrleitungen bekannt, bei der in eine Hülse auf einer Seite ein Rohrende einsteckbar ist und auf der gegenüberliegenden Seite eine Flanschverbindung vorgesehen ist. Die Hülse weist einen umgebördelten endseitigen Abschnitt auf, an dem ein scheibenförmiger Flansch anlegbar ist. Der Flansch ist jedoch lose ausgebildet und muss bei der Montage auf die Hülse aufgeschoben werden. Dies ist nachteilig, da auf der Baustelle eine Vielzahl von Einzelteilen bereitgestellt werden müssen, um daraus dann eine Flanschverbindung zu montieren.

Aus der US 6,494,503 B1 ist eine andere Flanschverbindung des Stands der Technik bekannt.

Ferner ist es für Sanitärinstallationen bekannt, Rohrleitungen über eine Pressverbindung mit Fittings oder Armaturen zu verbinden. Gerade bei größeren Durchmessern kann es jedoch vorkommen, dass zur Verbindung keine Pressverbindungen mehr vorgesehen werden, sondern Flanschverbindungen, beispielsweise zum Anschluss von Armaturen. Bei solchen Flanschverbindungen kann der von einem zylindrischen Stutzen hervorstehende radiale Flansch aus Vollmaterial gefertigt werden, was jedoch hohe Herstellkosten wegen des notwendigen Rohmaterials und der anschließenden Bearbeitungsschritte verursacht.

Es ist daher Aufgabe der vorliegenden Erfindung eine Flanschverbindung für Leitungen zu schaffen, die einfach zu montieren und kostengünstig herstellbar ist.

Diese Aufgabe wird mit einer Flanschverbindung mit den Merkmalen des Anspruches 1 gelöst.

Erfindungsgemäß weist der Flansch eine Öffnung auf, durch die der Stutzen durchgeführt ist, wobei der Flansch über Haltemittel an dem Stutzen fixiert ist. Durch eine solche mechanische Festlegung des Flansches wird eine montagefertige Einheit geschaffen, die als Flanschverbindung an Rohrleitungen, Armaturen, Fittings und dergleichen angeschlossen werden kann. Die Flanschverbindung lässt sich dabei kostengünstig herstellen, da Flansch und Stutzen getrennt gefertigt werden können, sodass keine aufwendigen Herstellungsverfahren eingesetzt werden müssen. Des weiteren kann für den Flansch ein kostengünstiger Werkstoff eingesetzt werden, da dieser aufgrund des gebördelten Stutzens nicht mit dem Medium in Kontakt gelangt.

Gemäß einer bevorzugten Ausgestaltung der Erfindung ist der Stutzen endseitig umgebördelt und der radial hervorstehende Abschnitt liegt an dem Flansch an. Dadurch ist der Flansch auf dieser Seite schon durch den vorstehenden Abschnitt in axialer Richtung fixiert.

Vorzugsweise ist der Flansch in axialer Richtung auf der anderen Seite durch die Haltemittel fixiert, sodass der Flansch unverlierbar an dem Stutzen gehalten ist.

Für eine einfache Herstellung der montagefertigen Flanschverbindung kann der Flansch an den Haltemitteln verrastbar sein. Dann braucht der Flansch lediglich auf die Haltemittel aufgeschoben zu werden und wird dort dann gehalten. Die Haltemittel können dabei einen Ring ausbilden, an dem radial hervorstehende Rastnasen ausgebildet sind, die an mehreren Stellen den Flansch gegen ein axiales Verschieben oder gegen ein Kippen sichern.

Gemäß einer weiteren Ausgestaltung der Erfindung umgreifen die Haltemittel den Stutzen und bilden eine Außenfläche aus, auf der der Flansch aufgesetzt ist. Die Haltemittel übernehmen dadurch auch die Funktion einer Zentrierung des Flansches, der beispielsweise konzentrisch zu der Achse des Stutzens angeordnet sein muss.

Erfindungsgemäß sind die Haltemittel aus mindestens zwei Segmenten gebildet, die zwischen Flansch und Stutzen eingefügt sind. Dabei sind die Haltemittel zwischen einem endseitigen an dem Stutzen radial hervorstehenden Abschnitt und einer Aufweitung an dem Stutzen axial fixiert, sodass die einzelnen Segmente in die entsprechende Aufnahme eingelegt werden und anschließend der Flansch aufgeschoben wird und somit die Haltemittel und der Flansch axial gesichert sind. Durch den umgebenden Flansch können die einzelnen Segmente des Haltemittels nicht in radiale Richtung bewegt werden.

Gemäß einer weiteren Ausgestaltung der Erfindung umfasst die Flanschverbindung einen Stutzen aus einem kaltumformbaren Material, die auf der zum Flansch gegenüberliegenden Seite über eine Pressverbindung mit einem einsteckbaren Rohrende verbindbar ist. Es ist natürlich möglich, die Flanschverbindung an beiden Seiten des Stutzens vorzusehen, also endseitig jeweils einen Flansch zu montieren. Auf der gegenüberliegenden Seite wird jedoch vorzugsweise eine Pressverbindung angeordnet, da diese schnell zu montieren ist und mit einem bestehenden Installationssystem zusammengesetzt werden kann. Für die Herstellung einer Pressverbindung kann an der vom Flansch gegenüberliegenden Seite eine innere Aufnahme an dem Stutzen geformt sein, in der ein Schneidring und/oder ein Dichtring gehalten sind. Der Stutzen kann dabei aus einem kaltumformbaren Material, wie Kupfer oder Stahl kostengünstig hergestellt sein.

Um auch auf lange Sicht eine ausreichend stabile Flanschverbindung bereitzustellen, besteht der Flansch vorzugsweise aus einer Scheibe aus Metall, beispielsweise aus Stahl, sodass entsprechend hohe Zugkräfte aufgenommen werden können. Die Haltemittel hingegen können kostengünstig aus Kunststoff gefertigt sein, da diese nur zur Vorfixierung dienen.

Die Erfindung wird nachfolgend anhand eines Ausführungsbeispieles mit Bezug auf die beigefügten Zeichnungen näher erläutert. Es zeigen:

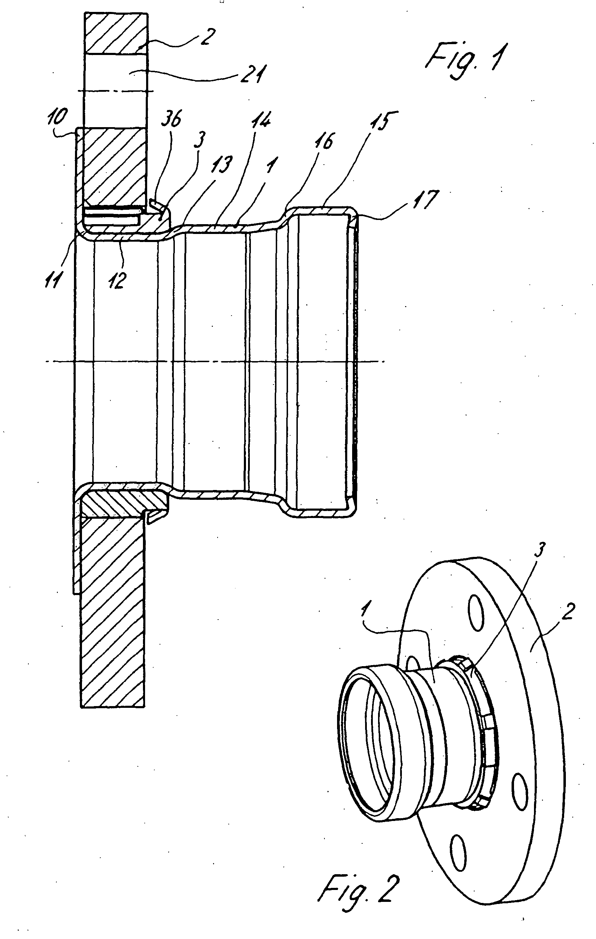

- Figur 1: eine geschnittene Seitenansicht durch ein Ausführungsbeispiel einer erfindungsgemäßen Flanschverbindung;

- Figur 2: eine perspektivische Ansicht der Flanschverbindung der Figur 1;
- Figur 3: eine geschnittene Seitenansicht des Stutzens der Flanschverbindung der Figur 1;
- Figur 4A und 4B: zwei Ansichten des Flansches der Flanschverbindung der Figur 1, und
- Figuren 5A bis 5C: mehrere Ansichten eines Haltemittels der Flanschverbindung der Figur 1.

Eine Flanschverbindung umfasst einen Stutzen 1 aus Metall, beispielsweise Kupfer, Stahl oder einem anderen durch Kaltumformung deformierbaren Material. Der Stutzen 1 ist endseitig an einer Seite mit einem Flansch 2 versehen, der über Haltemittel 3 an dem Stutzen 1 in axialer Richtung fixiert ist. Der Flansch 2 liegt endseitig an einem ringförmig radial hervorstehenden Abschnitt 10 des Stutzens 1 an, der durch Umbördeln hergestellt ist und von einer Krümmung 11 in einen zylindrischen Abschnitt 12 übergeht. Um den zylindrischen Abschnitt 12 sind die Haltemittel 3 angeordnet, die hervorstehende Rastnasen 36 aufweisen, die den Flansch 2 gegebenenfalls mit etwas Spiel festlegen. Die Haltemittel 3 sind dabei in axialer Richtung fixiert und liegen in einem mittleren Bereich des Stutzens 1 an einer Aufweitung 13 an. An die Aufweitung 13 schließt sich ein zylindrischer Abschnitt 14 an, der in einem Endabschnitt für eine Pressverbindung mündet.

Die Pressverbindung auf der zum Flansch 2 gegenüberliegenden Seite umfasst eine Aufnahme 15, in die ein Dichtring und/oder ein Schneidring einlegbar sind. Die Aufnahme 15 wird beidseitig durch radial nach innen gerichtete Abschnitte 16 und 17 begrenzt, sodass Dichtring und/oder Schneidring unverlierbar in der Aufnahme 15 gehalten sind. Es ist auch möglich, mehrere Aufnahmen 15 benachbart zueinander anzuordnen, um Schneidring und Dichtring getrennt voneinander anzuordnen, wie dies beispielsweise in der DE 297 21 760 U gezeigt ist. Ferner ist es natürlich möglich, auf der Seite der Aufnahme 15 eine weitere Flanschverbindung, eine Gewindeverbindung oder andere Verbindung vorzusehen.

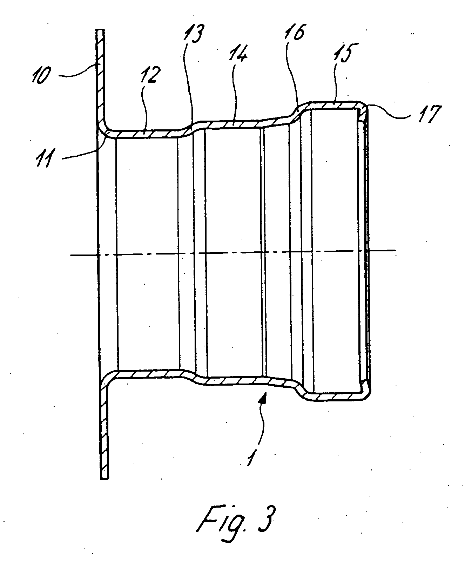

Wie in Figur 3 gezeigt ist, wurde der Stutzen 1 integral aus einem Material gebildet, wobei durch Materialumformung der radial hervorstehende Abschnitt 10 sowie die anderen Abschnitte ausgebildet wurden. Zur Herstellung einer montagefertigen Flanschverbindung werden dann lediglich die Befestigungsmittel 3 sowie der Flansch 2 montiert und gegebenenfalls auch Dichtring und/oder Schneidring in die Aufnahme 15 eingelegt.

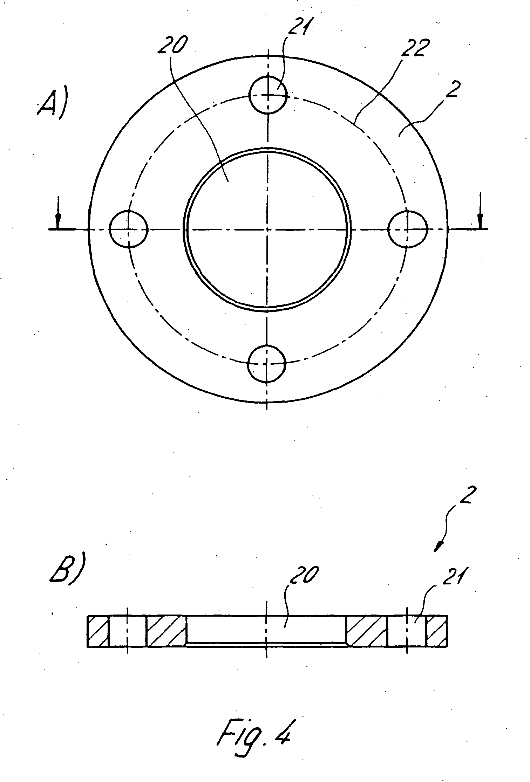

In den Figuren 4A und 4B ist der Flansch 2 im Detail dargestellt, der aus Metall, vorzugsweise Stahl besteht. Der Flansch 2 weist eine mittige Öffnung 20 auf, durch die der Stutzen 1 durchgeführt ist. Im Bereich der Öffnung 20 besteht ein Abstand zwischen dem zylindrischen Abschnitt 12 und dem Flansch 2, in dem die Befestigungsmittel 3 angeordnet sind. Der Flansch 2 weist ferner mehrere Öffnungen 21 auf, die auf einem Lochkreisdurchmesser 22 angeordnet sind, der so bemessen ist, dass der radial hervorstehende Abschnitt 10 bis maximal zu den Öffnungen 21 hervorsteht, diese jedoch nicht überdeckt. Der Flansch 2 kann über bekannte Befestigungsmittel, wie Schrauben und Muttern mit einem weiteren Bauteil, wie einer Armatur verbunden werden, wobei an dem radial hervorstehenden Abschnitt 10 Dichtmittel montiert werden können.

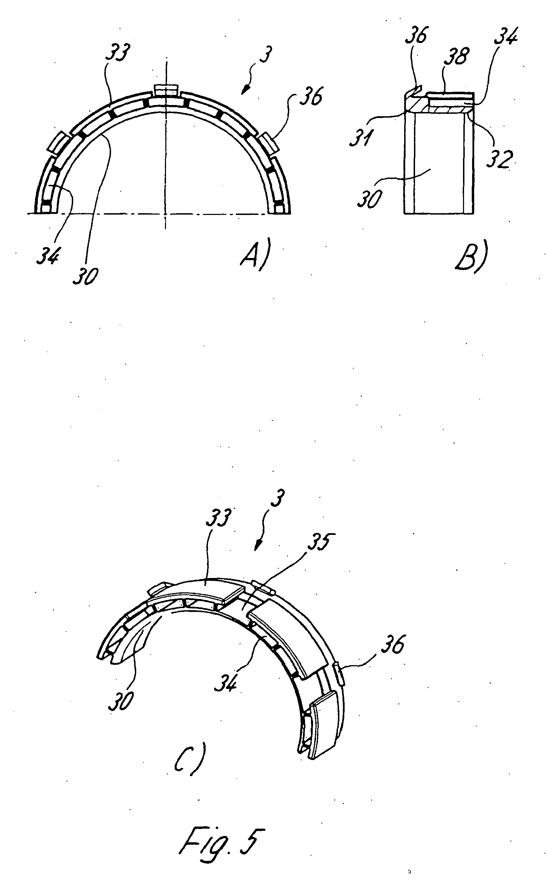

In den Figuren 5A bis 5C ist ein Teil der beiden Haltemittel 3 gezeigt, die jeweils durch ein Ringsegment aus Kunststoffmaterial gebildet sind. Die Haltemittel 3 weisen eine innere Umfangsfläche 30 auf, die an den zylindrischen Abschnitt 12 anlegbar ist. Die innere Umfangsfläche ist endseitig aufgeweitet, wobei eine Kante 31 an der Krümmung 11 anliegt, während die gegenüberliegende Kante 32 an der Aufweitung 13 anliegt, sodass die Haltemittel 3 in axialer Richtung formschlüssig an dem Stutzen 1 aufnehmbar sind.

Die Haltemittel 3 weisen ferner eine äußere Umfangsfläche 33 auf, auf die der Flansch 2 mit der Öffnung 20 aufgeschoben werden kann. Die äußere Umfangsfläche 33 besitzt dabei etwa denselben Durchmesser wie die äußere Fläche der Aufnahme 15. Zwischen der inneren Umfangsfläche 30 und der äußeren Umfangsfläche 33 sind Hohlkammern 34 ausgebildet, sodass die Haltemittel 3 einen Abstandshalter für den Flansch 2 ausbilden und diesen gegenüber dem Stutzen 1 zentrieren. Die äußere Umfangsfläche 33 ist an Stellen 35 unterbrochen, an denen Rastnasen 36 vorgesehen sind. Die Rastnasen 36 sind einem axialen Ende der Haltemittel 3 angeformt und stehen radial über die äußere Umfangsfläche 33 hervor, sodass der Flansch 2 über die Rastnasen 36 aufgeschoben werden kann, damit diese sich dann radial nach innen verformen und nach einer Freigabe in radiale Richtung zurück bewegt werden, so dass eine Stirnkante der Rastnasen 36 den Flansch 2 in axialer Richtung sichert.

Die beiden Ringsegmente werden für eine Montage der Flanschverbindung in die Aufnahme 12 eingelegt und anschließend wird der Flansch 2 mit der Öffnung 20 aufgerastet. Danach kann der Flansch 2 nicht mehr in axiale Richtung abgezogen werden und die Haltemittel 3 als Ringsegmente können nicht mehr in radiale Richtung nach außen bewegt werden, da dies der Flansch 2 verhindert. Zur Demontage müssten daher die Rastnasen 36 sämtlich nach innen gedrückt werden, um zunächst den Flansch 2 wieder abzunehmen und dann die Haltemittel 3 zu entfernen.

In dem gezeigten Ausführungsbeispiel sind die Haltemittel 3 durch zwei Segmente gebildet, die um den Stutzen 1 gelegt werden können. Es ist natürlich auch möglich, mehrere Segmente um den Stutzen 1 anzuordnen und dann durch den Flansch 2 zu sichern. Ferner können die einzelnen Segmente über ein Gelenk, beispielsweise ein durch eine Materialschwächung gebildetes Filmscharnier miteinander verbunden sein.

Zudem muss sich das Haltemittel nicht um den vollständigen Umfang des Stutzens 1 erstrecken, sondern es kann auch ausreichen, ein Haltemittel elastisch über den Stutzen aufzurasten, wobei das in den Figuren 5A bis 5C gezeigte Segment einen Winkel von beispielsweise 230 bis 360° des Stutzens 1 umschließen könnte, so dass noch eine Zentrierung des Flansches 2 gewährleistet ist.

Statt einer Verrastung des Flansches 2 über die Haltemittel 3 kann auch eine klemmende Fixierung des Flansches 2 erfolgen. Beispielsweise können sich keilförmig aufweitende Segmente zwischen dem zylindrischen Abschnitt 12 und der Öffnung 20 vorgesehen sein, die dann für eine Fixierung des Flansches 2 sorgen.

## Patentansprüche

1. Flanschverbindung für Leitungen, insbesondere für Sanitärinstallationen, mit:
- einem Stutzen (1), der endseitig jeweils mit einem Rohr zur Herstellung einer abgedichteten Verbindung zusammenfügbar ist, und
- einem Flansch (2), der radial außen an dem Stutzen (1) angeordnet ist und über Befestigungsmittel an einem weiteren Bauteil festlegbar ist, um eine Verbindung zwischen dem Stutzen (1) und dem weiteren Bauteil herzustellen, wobei der Flansch (2) eine Öffnung (20) aufweist, durch die der Stutzen (1) durchgeführt ist und der Flansch (2) über Haltemittel (3) an dem Stutzen (1) fixiert ist,
wobei die Haltemittel (3) aus mindestens zwei Segmenten gebildet sind, die zwischen Flansch (2) und Stutzen (1) eingefügt sind,
**dadurch gekennzeichnet, dass** die Haltemittel (3) zwischen einem endseitig an dem Stutzen (1) radial hervorstehenden Abschnitt (10) und einer Aufweitung (13) an dem Stutzen (1) axial fixiert sind.

2. Flanschverbindung nach Anspruch 1, **dadurch gekennzeichnet, dass** der Stutzen (1) endseitig umgebördelt ist und der radial hervorstehende Abschnitt (10) an dem Flansch (2) anliegt.

3. Flanschverbindung nach Anspruch 2, **dadurch gekennzeichnet, dass** der Flansch (2) in axialer Richtung zwischen dem radialen Abschnitt (10) und den Haltemitteln (3) fixiert ist.

4. Flanschverbindung nach einem der Ansprüche 1 bis 3, **dadurch gekennzeichnet, dass** der Flansch (2) an den Haltmitteln (3) verrastbar ist.

5. Flanschverbindung nach einem der Ansprüche 1 bis 4, **dadurch gekennzeichnet, dass** die Haltemittel (3) einen Ring ausbilden, an dem radial hervorstehende Rastnasen (36) ausgebildet sind.

6. Flanschverbindung nach einem der Ansprüche 1 bis 5, **dadurch gekennzeichnet, dass** die Haltemittel (3) den Stutzen (1) umgreifen und eine Außenfläche (33) ausbilden, auf der der Flansch (2) aufgesetzt ist.

7. Flanschverbindung nach einem der Ansprüche 1 bis 6, **dadurch gekennzeichnet, dass** der Stutzen (1) aus einem kaltumformbaren Material gebildet ist und auf der zum Flansch (2) gegenüberliegenden Seite über eine Pressverbindung mit einem einsteckbaren Rohrende verbindbar ist.

8. Flanschverbindung nach Anspruch 7, **dadurch gekennzeichnet, dass** an der vom Flansch (2) gegenüberliegenden Seite eine innere Aufnahme (15) an dem Stutzen (1) geformt ist, in der ein Schneidring und/oder ein Dichtring gehalten sind.

9. Flanschverbindung nach einem der Ansprüche 1 bis 8, **dadurch gekennzeichnet, dass** der Flansch (2) aus einer Scheibe aus Metall, vorzugsweise aus Stahl, gebildet ist.

10. Flanschverbindung nach einem der Ansprüche 1 bis 9, **dadurch gekennzeichnet, dass** die Haltemittel (3) aus Kunststoff hergestellt sind.

## Claims

1. A flange connection for tubing, in particular for sanitary installations, comprising:
- a connection piece (1) which can be joined at each of its ends with a tube for providing a sealed connection, and
- a flange (2) arranged radially at the outer side of the connection piece (1), and which can be fixed to another component by means of fasteners to provide for a connection between the connection piece (1) and said other component, said flange (2) having an opening (20) through which the connection piece (1) is passed and said flange (2) being fixed to the connection piece (1) by means of retaining means (3),
wherein said retaining means (3) are formed of at least two segments which are inserted between said flange (2) and said connection piece (1),
**characterized in that** the retaining means (3) are axially fixed on the connection piece (1) between a radially projecting portion (10) at the end of the connection piece (1) and an expanded part (13).

2. The flange connection according to claim 1, **characterized in that** the connection piece (1) has a beaded end and the radially projecting portion (10) is in a close fit with the flange (2).

3. The flange connection according to claim 2, **characterized in that** the flange (2) is fixed in axial direction between the radial portion (10) and the retaining means (3).

4. The flange connection according to one of claims 1 to 3, **characterized in that** the flange (2) can be locked with the retaining means (3).

5. The flange connection according to one of claims 1 to 4, **characterized in that** the retaining means (3) form a ring provided with radially projecting locking projections (36).

6. The flange connection according to one of claims 1 to 5, **characterized in that** the retaining means (3) encompass the connection piece (1) and form an outer surface (33) onto which the flange (2) is fit.

7. The flange connection according to one of claims 1 to 6, **characterized in that** the connection piece (1) is made of a cold forming material and can be connected by means of a press connection at the side opposite to the flange (2) with an insertable tube end.

8. The flange connection according to claim 7, **characterized in that** an inner seat (15) is formed in the connection piece (1) at the side opposite to the flange (2), said seat containing a cutting ring and/or a sealing ring.

9. The flange connection according to one of claims 1 to 8, **characterized in that** the flange (2) is made of a metal disk, preferably made of steel.

10. The flange connection according to one of claims 1 to 9, **characterized in that** the retaining means (3) are made of plastic.

## Revendications

1. Raccordement à brides pour conduites, en particulier pour des installations sanitaires, avec:
- une tubulure (1) qui peut être assemblée aux extrémités respectivement à un tube pour la réalisation d'une connexion étanche, et
- une bride (2) qui est disposée radialement à l'extérieur sur la tubulure (1) et qui peut être fixée par des moyens de fixation sur un autre composant, pour établir une connexion entre la tubulure (1) et l'autre composant, la bride (2) présentant une ouverture (20) qui est traversée par la tubulure (1) et la bride (2) étant fixée sur la tubulure (1) sur des moyens de retenue (3),
les moyens de retenue (3) se composant de au moins deux segments qui sont insérés entre la bride (2) et la tubulure (1),
**caractérisé en ce que** les moyens de retenue (3) sont fixés radialement sur la tubulure (1) entre une section (10) faisant saillie radialement sur l'extrémité de la tubulure (1) et un élargissement (13).

2. Raccordement selon la revendication 1, **caractérisé en ce que** la tubulure (1) est bordée à l'extrémité et la section faisant saillie radialement (10) s'applique sur la bride (2).

3. Raccordement à brides selon la revendication 2, **caractérisé en ce que** la bride (2) est fixée dans la direction axiale entre la section radiale (10) et les moyens de retenue (3).

4. Raccordement à brides selon l'une des revendications 1 à 3, **caractérisé en ce que** la bride (2) peut être enclenchée sur les moyens de retenue (3).

5. Raccordement à brides selon l'une des revendications 1 à 4, **caractérisé en ce que** les moyens de retenue (3) forment une bague sur laquelle sont ménagés des nez d'encliquetage faisant saillie radialement (36).

6. Raccordement à brides selon l'une des revendications 1 à 5, **caractérisé en ce que** les moyens de retenue (3) entourent la tubulure (1) et forment une surface externe (33) sur laquelle est placée la bride (2).

7. Raccordement à brides selon l'une des revendications 1 à 6, **caractérisé en ce que** la tubulure (1) se compose d'un matériau déformable à froid et est reliable sur la face opposée de la bride (2) à une extrémité de tube insérable par un ajustement avec serrage.

8. Raccordement à brides selon la revendication 7, **caractérisé en ce qu'**il est formé sur la face opposée à la bride (2) un logement interne (15) sur la tubulure (1), dans laquelle sont maintenues une bague coupante et/ou une bague d'étanchéité.

9. Raccordement à brides selon l'une des revendications 1 à 8, **caractérisé en ce que** la bride (2) est réalisée à partir d'un disque en métal de préférence en acier.

10. Raccordement selon l'une des revendications 1 à 9, **caractérisé en ce que** les moyens de retenue (3) sont composés de matière plastique.
